# EUROPEAN PATENT APPLICATION

(11) **EP 3 579 083 A1**
(43) Date of publication of application: **11.12.2019**
(21) Application number: 19178076.6
(22) Date of filing: 04.06.2019
(51) Int. Cl.: G06F 3/01

(54) **SYSTEMS AND METHODS FOR PROVIDING LOCALIZED PRESSURE SENSING AND HAPTIC EFFECTS FOR A TOUCH SURFACE**

(30) Priority: 04.06.2018 US 201815997255
(71) Applicant: Immersion Corporation, San Jose, CA 95134 (US)
(72) Inventor: OLIEN, Neil T., Montreal, Québec H2W 2R2 (CA); CRUZ-HERNANDEZ, Juan Manuel, Montreal, Québec H2W 2R2 (CA)
(74) Representative: McDougall, Robert Campbell

(57) **Abstract**

One illustrative system (100) disclosed herein includes a computing device (101) with a macro fiber composite (MFC) element (118) coupled to a touch surface (116) of the computing device. The MFC element is attached to the touch surface at a particular location and detects a pressure associated with a contact on the touch surface at the location of the MFC element and transmits a signal indicating the pressure to a processor (102). The processor determines a haptic effect based on the pressure and transmits a haptic signal associated with the haptic effect to the MFC, which outputs the haptic effect to the location of the touch surface based on the haptic signal.

## Description

The present disclosure relates generally to user interface devices. More specifically, but not by way of limitation, this disclosure relates to sensing localized pressure on a touch surface and providing haptic effects on the touch surface.

Many modern devices can include a touch surface (e.g., a touchpad) that can be used to provide input to the device or interact with one or more objects displayed by the device (e.g., by touching or clicking the touch sensitive surface). However, some such touch surfaces may lack haptic feedback capabilities.

Various embodiments of the present disclosure provide systems and methods for sensing localized pressures on a touch surface and providing haptic effects to the touch surface.

In a first aspect of the present invention there is provided a system of the present disclosure comprises a touch surface and a macro fiber composite (MFC) element coupled to the touch surface at a location on the touch surface. The MFC element may be configured to detect a pressure associated with a contact on the touch surface at the location and transmit a signal indicating the pressure. The system may further comprise a processor communicatively coupled to the MFC element. The processor may be configured to receive, from the MFC element, the signal indicating the pressure. The processor may be further configured to determine an amount of pressure or a change in pressure at the location based at least in part on the signal. The processor may be further configured determine a haptic effect associated with the amount of pressure or the change in pressure. The processor may be further configured to transmit a haptic signal associated with the haptic effect to the MFC element. The MFC element may be configured to receive the haptic signal and output the haptic effect to the location on the touch surface based on the haptic signal.

In a second aspect of the present invention there is provided a method which may comprise any one or more of the following: detecting, by a macro fiber composite (MFC) element, a pressure associated with a contact at a location on a touch surface, wherein the MFC element may be coupled to the touch surface at the location; receiving, by a processor, a signal associated with the pressure; determining, by the processor, a haptic effect based on the signal; transmitting, by the processor, a haptic signal associated with the haptic effect to the MFC element; and outputting, by the MFC element, the haptic effect to the location on the touch surface.

In a third aspect of the present invention there is provided a system that may comprise a touch surface and a macro fiber composite (MFC) element coupled to the touch surface at a location on the touch surface and beneath the touch surface. The MFC element may be configured to detect a pressure associated with a contact on the touch surface at the location and transmit a signal indicating the pressure and the MFC element may be configured to receive a haptic signal and output a haptic effect to the location on the touch surface in response to receiving the haptic signal.

In a fourth aspect of the present invention there is provided a system comprising: a touch surface; a macro fiber composite (MFC) element coupled to the touch surface at a location on the touch surface, wherein the MFC element is configured to detect a pressure associated with a contact on the touch surface at the location and transmit a signal indicating the pressure; and, a processor communicatively coupled to the MFC element, the processor configured to: receive, from the MFC element, the signal indicating the pressure; determine an amount of pressure or a change in pressure at the location based at least in part on the signal; determine a haptic effect associated with the amount of pressure or the change in pressure; and, transmit a haptic signal associated with the haptic effect to the MFC element, wherein the MFC element is configured to receive the haptic signal and output the haptic effect to the location on the touch surface based on the haptic signal.

The fourth and first aspects may be modified in any suitable way as disclosed herein including, but not limited to, any one or more of the following.

The system may further comprise: a first electrical circuit communicatively coupled to the MFC element, the first electrical circuit configured to transmit a first signal to the MFC element to cause the MFC element to detect the pressure and transmit the signal indicating the pressure; and, a second electrical circuit communicatively coupled to the MFC element, the second electrical circuit configured to transmit a second signal to the MFC element to cause the MFC element to receive the haptic signal from the processor and output the haptic effect based on the haptic signal.

The system may further comprise a switching circuit, the switching circuit operable for switching between the first electrical circuit and the second electrical circuit.

The system may be configured such that the touch surface comprises a feature for identifying the location of the MFC element.

The system may be configured such that the feature comprises at least one of a marking, lighting, an indentation, or a protrusion that corresponds to the location of the MFC element.

The system may be configured such that the MFC element is a first MFC element coupled to a first portion of the touch surface at a first location on the touch surface, the first MFC element configured to receive a first haptic signal associated with a first haptic effect and output the first haptic effect to the first location on the touch surface and the system further comprises: a second MFC element coupled to a second portion of the touch surface at a second location on the touch surface, the second MFC element configured to receive a second haptic signal associated with a second haptic effect and output the second haptic effect to the second location on the touch surface.

The system may be configured such that the touch surface has a first thickness at the location of the MFC element and a second thickness at a remainder of the touch surface, wherein the first thickness is thinner than the second thickness.

In a fifth aspect of the present invention therefore is provided a method comprising: detecting, by a macro fiber composite (MFC) element, a pressure associated with a contact at a location on a touch surface, wherein the MFC element is coupled to the touch surface at the location; receiving, by a processor, a signal associated with the pressure; determining, by the processor, a haptic effect based on the signal; transmitting, by the processor, a haptic signal associated with the haptic effect to the MFC element; and, outputting, by the MFC element, the haptic effect to the location on the touch surface.

The second and fifth aspects may be modified in any suitable way as disclosed herein including, but not limited to, any one or more of the following.

The method may further comprise: transmitting, by a first electrical circuit, a first signal to the MFC element; detecting, by the MFC element, the pressure associated with the contact in response to receiving the first signal; transmitting, by a second electrical circuit, a second signal to the MFC element; and, receiving, by the MFC element, the haptic signal from the processor in response to receiving the second signal.

The method may further comprise switching, via a switching circuit, between the first electrical circuit and the second electrical circuit, wherein switching between the first electrical circuit and the second electrical circuit comprises: transmitting, by the first electrical circuit, the first signal; and, switching, by the switching circuit and after transmitting, by the first electrical circuit, the first signal, the first electrical circuit to an inactive mode; and, transmitting, by the second electrical circuit and after the first electrical circuit is in the inactive mode, the second signal.

The method may be configured such that the touch surface comprises a feature for identifying the location of the MFC element.

The method may be configured such that the feature comprises at least one of a marking, lighting, an indentation, or a protrusion that corresponds to the location of the MFC element.

The method may be configured such that the MFC element is a first MFC element coupled to a first portion of the touch surface at a first location on the touch surface, the method may further comprise: receiving, by the first MFC element, a first haptic signal associated with a first haptic effect; outputting, by the first MFC element, the first haptic effect to the first location on the touch surface; receiving, by a second MFC element coupled to a second portion of the touch surface at a second location on the touch surface, a second haptic signal associated with a second haptic effect; and, outputting, by the second MFC element, the second haptic effect to the second location on the touch surface.

The method may be configured such that the touch surface has a first thickness at the location of the MFC element and a second thickness at a remainder of the touch surface, wherein the first thickness is thinner than the second thickness.

In a sixth aspect of the present invention there is provided a system comprising: a touch surface; and, a macro fiber composite (MFC) element coupled to the touch surface at a location on the touch surface and beneath the touch surface, wherein the MFC element is configured to detect a pressure associated with a contact on the touch surface at the location and transmit a signal indicating the pressure and wherein the MFC element is configured to receive a haptic signal and output a haptic effect to the location on the touch surface in response to receiving the haptic signal.

The third and sixth aspects may be modified in any suitable way as disclosed herein including, but not limited to, any one or more of the following.

The system may further comprise: a processor communicatively coupled to the MFC element, the processor configured to: receive, from the MFC element, the signal indicating the pressure; determine an amount of pressure or a change in pressure at the location based at least in part on the signal; determine a haptic effect associated with the amount of pressure or the change in pressure; and, transmit a haptic signal associated with the haptic effect to the MFC element.

The system may further comprise: a first electrical circuit communicatively coupled to the MFC element, the first electrical circuit configured to transmit a first signal to the MFC element to cause the MFC element to detect the pressure and transmit the signal indicating the pressure; and, a second electrical circuit communicatively coupled to the MFC element, the second electrical circuit configured to transmit a second signal to the MFC element to cause the MFC element to receive the haptic signal and output the haptic effect based on the haptic signal.

The system may further comprise: a switching circuit, the switching circuit operable for switching between the first electrical circuit and the second electrical circuit.

The system may be configured such that the touch surface comprises a feature for identifying the location of the MFC element, wherein the feature comprises at least one of a marking, lighting, an indentation, or a protrusion that corresponds to the location of the MFC element.

The system may be configured such that the MFC element is a first MFC element coupled to a first portion of the touch surface at a first location on the touch surface, the first MFC element configured to receive a first haptic signal associated with a first haptic effect and output the first haptic effect to the first location on the touch surface and the system further comprises: a second MFC element coupled to a second portion of the touch surface at a second location on the touch surface, the second MFC element configured to receive a second haptic signal associated with a second haptic effect and output the second haptic effect to the second location on the touch surface.

In a seventh aspect of the present invention there is provided a method comprising: detecting a pressure on a touch surface of a computing device; transmitting a signal associated with the pressure to a processor; determining a haptic effect associated with the pressure; transmitting a haptic signal associated with the haptic effect to a macro fiber composite element coupled to the touch sensitive surface; output the haptic effect via the macro fiber composite element.

The seventh aspect may be modified in any suitable way as disclosed herein including, but not limited to, any one or more of the steps and/or features described in the fifth aspect and any of the optional features or steps described for the fifth aspect.

These aspects are mentioned not to limit or define the limits of the present subject matter, but to provide examples to aid understanding thereof. Illustrative embodiments are discussed in the Detailed Description, and further description is provided there. Advantages offered by various embodiments may be further understood by examining this specification and/or by practicing one or more embodiments of the claimed subject matter.

A full and enabling disclosure is set forth more particularly in the remainder of the specification. The specification makes reference to the following appended figures.
Figure 1 is a block diagram showing a system for providing localized pressure sensing and haptic effects on a touch surface according to one embodiment.
Figure 2 shows an embodiment of a haptic actuation system for providing localized pressure sensing and haptic effects on a touch surface according to one embodiment.
Figure 3 is a flow chart of steps for performing a method for providing localized pressure sensing and haptic effects on a touch surface according to one embodiment.
Figure 4 shows an embodiment of a macro fiber composite (MFC) element for providing localized pressure sensing and haptic effects on a touch surface according to one embodiment.
Figure 5 shows a MFC element for providing localized pressure sensing and haptic effects on a touch surface according to another embodiment.
Figure 6 shows a MFC element for providing localized pressure sensing and haptic effects on a touch surface according to another embodiment.
Figure 7 shows a MFC element for providing localized pressure sensing and haptic effects on a touch surface according to another embodiment.
Figure 8 shows an embodiment of a haptic actuation system for providing localized pressure sensing and haptic effects on a touch surface according to one embodiment.
Figure 9 is a block diagram showing a system for providing localized pressure sensing and haptic effects on a touch surface according to another embodiment.

Reference now will be made in detail to various and alternative illustrative embodiments and to the accompanying drawings. Each example is provided by way of explanation and not as a limitation. It will be apparent to those skilled in the art that modifications and variations can be made. For instance, features illustrated or described as part of one embodiment may be used in another embodiment to yield a still further embodiment. Furthermore each of the first to seventh aspects listed above may be modified using any of the features described below in the examples. Thus, it is intended that this disclosure includes modifications and variations that come within the scope of the appended claims and their equivalents.

### Illustrative Examples of a Haptic Actuation System for Providing Localized Pressure Sensing and Haptic Effects for a Touch Surface

One illustrative embodiment of the present disclosure comprises a computing device, such as a personal computer or a smartphone. The computing device comprises a touch sensitive surface (e.g., a touchpad), a memory, a macro fiber composite (MFC) element, and a processor in communication with each of these elements. In this embodiment, the MFC element is connected or coupled to the touch sensitive surface. As used herein, the term "MFC element" is used to refer to a component or element that acts as both an actuator and a sensor. In some examples, the term "MFC element" can be used to refer to a transducer that uses energy to output a haptic effect or receives energy as an input. For example, the MFC element can be used as a sensor when the MFC element is pressed, touched, bended, etc. In this example, when the MFC element is pressed, touched, bended, etc., one or more actuator leads or terminals of the MFC element can carry a voltage that can be detected, amplified, analyzed, etc. by a microcontroller.

In the illustrative embodiment, a user of the computing device can provide user input via the touch sensitive surface such as, for example, by touching the touch sensitive surface or clicking the touch sensitive surface to interact with an object displayed via a display device of the computing device. The MFC element can be connected or coupled to the touch sensitive surface at a particular location or position that corresponds to a location or position of the object displayed via the display device. The MFC element can act as both an actuator and a sensor that can be capable of detecting or sensing an amount of localized pressure applied by the user on the touch sensitive surface or a change in localized pressure on the touch sensitive surface at that location as the user touches the touch sensitive surface. The MFC element can transmit a signal indicating the amount of pressure or the change in pressure to the processor, which can determine a haptic effect based at least in part on the user input (e.g., based on the amount of pressure or the change in pressure).

As an example, the MFC element can be coupled to the touch sensitive surface at a position corresponding to a location of an object displayed via the display device of the computing device. The user can touch or click on the touch sensitive surface to select or interact with the object and the MFC element detects an amount of pressure associated with the touch or a change in pressure on the touch sensitive surface based on the touch. The MFC element can transmit a signal indicating the amount of pressure or the change in pressure to the processor, and the processor can determine a haptic effect associated with the amount of pressure or the change in pressure caused by the user's touch or clicking on the object on the display device. In the illustrative embodiment, the processor is configured to receive the signal indicating the amount of pressure or the change in pressure from the MFC element and transmit a haptic signal associated with the haptic effect to the MFC element. The MFC element is configured to receive the haptic signal and output one or more haptic effects (e.g., textures, vibrations, stroking sensations, and/or stinging sensations) based on the haptic signal.

In some embodiments, the MFC element and/or the processor can be electrically or communicatively connected to one or more electrical circuits. In one such embodiment, the MFC element can be electrically connected or coupled to a first electrical circuit. The first electrical circuit can be configured to transmit a signal to the MFC element to cause the MFC element to act as a sensor and detect a pressure or a change in pressure caused by a touch on the touch sensitive surface and transmit a sensor signal to the processor for determining an amount of pressure or a change in pressure based on the touch on the touch sensitive surface.

The MFC element can be electrically connected or coupled to a second electrical circuit. This second electrical circuit can be configured to transmit a signal to the MFC element to cause the MFC element to receive a haptic signal from the processor to cause the MFC element to output a haptic effect based on the haptic signal. In some embodiments, a switching circuit can be electrically or communicatively connected to the one or more electrical circuits to switch between the circuits. Examples of a switching circuit can include, but are not limited to, a relay switch circuit such as, a NPN relay switch circuit, a NPN Darlington relay switch circuit, an Emitter Follower relay switch circuit, an Emitter Darlington relay switch circuit, a PNP relay switch circuit, a PNP Collector relay switch circuit, an N-channel MOSFET relay switch circuit, a P-channel MOSFET relay switch circuit, a logic controlled relay switch circuit, a micro-controller relay switch circuit, etc. For example, the switching circuit can be configured to connect the MFC element to the first electrical circuit such that the first electrical circuit causes the MFC element to act as a sensor and detect pressure or a change in pressure on the touch sensitive surface and transmit a sensor signal to the processor. In this example, once the sensor signal is transmitted, the processor can generate a switching signal and transmit the switching signal to the switching circuit, which causes the switching circuit to switch the connection of the MFC element from the first electrical circuit to the second electrical circuit (e.g., activate or cause the second electrical circuit to be in an ON mode) to cause the first electrical circuit to be inactive mode (e.g., in an OFF mode). In this example, once the MFC element is connected to the second electrical circuit, the processor can generate a haptic signal and transmit the haptic signal to the second electrical circuit. In some examples, a power amplifier of the second electrical circuit can receive the haptic signal and amplify or otherwise adjust the haptic signal (e.g., adjust a current or voltage of the haptic signal) and the second electrical circuit can output the amplified or adjusted haptic signal to the MFC element to cause the MFC element to output a haptic effect. In this manner, the switching circuit can act as a switch that causes the MFC element to be connected to either the first electrical circuit or the second electrical circuit and act as either a sensor or a haptic actuator.

In the illustrative embodiment, the MFC element can be coupled to the touch sensitive surface to output the haptic effects to the touch sensitive surface. As an example, the MFC element can be positioned beneath the touch sensitive surface at a particular location on the touch sensitive surface or form a portion of the touch sensitive surface. As another example, the MFC element can be bonded or mechanically attached or coupled to the touch sensitive surface at a particular location on the touch sensitive surface. In some embodiments, the MFC element can be coupled to an isolated or single portion of the touch sensitive surface to output a haptic effect to the isolated or single portion of the touch sensitive surface. In another embodiment, the MFC element can be a single contiguous haptic output device coupled to an entire area of the touch sensitive surface.

In some embodiments, the touch sensitive surface can include one or more components or features for indicating a position or location of the MFC element. For example, a design or configuration of the touch sensitive surface can include a marking, paint, lighting, illumination, or other visual features at a position or location of the MFC element, which can indicate to a user the location or position of the MFC element. As another example, a design or configuration of the touch sensitive surface can include an indentation (e.g., a divot), a protrusion (e.g., a bump) or any other physical feature at the location or position of the MFC element, which can indicate to the user the location or position of the MFC element. In another embodiment, the touch sensitive surface may not include a component or feature for indicating a position or location of the MFC element. As an example, the touch sensitive surface can be a contiguous surface without any indentations or protrusions.

These illustrative examples are given to introduce the reader to the general subject matter discussed here and are not intended to limit the scope of the disclosed concepts. The following sections describe various additional features and examples with reference to the drawings in which like numerals indicate like elements, and directional descriptions are used to describe the illustrative examples but, like the illustrative examples, should not be used to limit the present disclosure.

### Illustrative Systems for Providing Localized Pressure Sensing and Haptic Effects for a Touch Surface

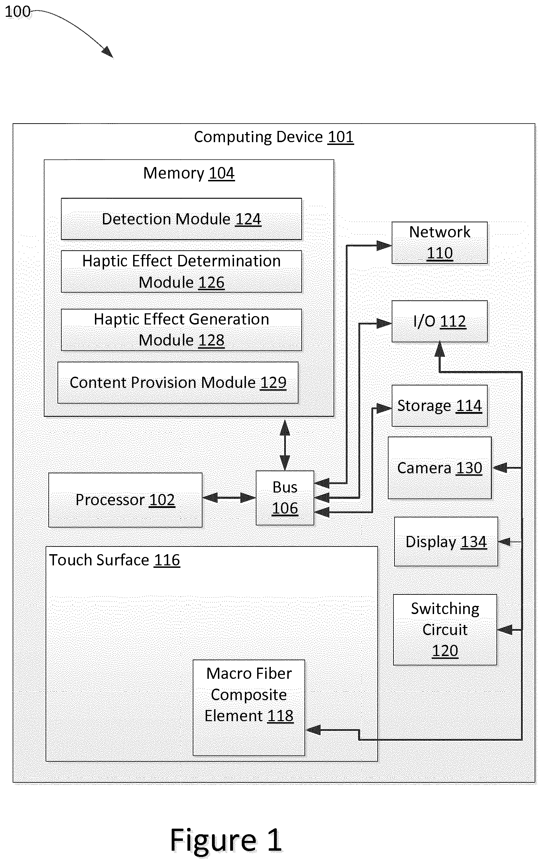

Figure 1 is a block diagram showing a system 100 for providing localized pressure sensing and haptic effects on a touch surface (e.g., a touch sensitive surface) according to one embodiment. In the embodiment depicted in Figure 1, the system 100 comprises a computing device 101 having a processor 102 in communication with other hardware via a bus 106. The computing device 101 may comprise, for example, a personal computer, a mobile device (e.g., a smartphone), tablet, e-reader, smartwatch, a wearable device, etc. In some embodiments, the computing device 101 may include all or some of the components depicted in Figure 1.

A memory 104, which can comprise any suitable tangible (and non-transitory) computer-readable medium such as random access memory ("RAM"), read-only memory ("ROM"), erasable and programmable read-only memory ("EEPROM"), or the like, embodies program components that configure operation of the computing device 101. In the embodiment shown, computing device 101 further includes one or more network interface devices 110, input/output (I/O) interface components 112, and storage 114.

Network interface device 110 can represent one or more of any components that facilitate a network connection. Examples include, but are not limited to, wired interfaces such as Ethernet, USB, IEEE 1394, and/or wireless interfaces such as IEEE 802.11, Bluetooth, or radio interfaces for accessing cellular telephone networks (e.g., transceiver/antenna for accessing a CDMA, GSM, UMTS, or other mobile communications network).

I/O components 112 may be used to facilitate wired or wireless connections to devices such as one or more displays 134, game controllers, keyboards, mice, joysticks, cameras, buttons, speakers, microphones and/or other hardware used to input or output data. Storage 114 represents nonvolatile storage such as magnetic, optical, or other storage media included in computing device 101 or coupled to the processor 102.

In some embodiments, the computing device 101 includes a touch surface 116 (e.g., a touchpad or touch sensitive surface). In some embodiments, the touch surface 116 can be flexible or deformable. In some embodiments, touch surface 116 represents any surface that can be configured to sense tactile input of a user. While in this example, the computing device 101 includes a touch surface 116 that is described as being configured to sense tactile input of a user, the present disclosure is not limited to such configurations. Rather, in other examples, the computing device 101 can include the touch surface 116 and/or any surface that may not be configured to sense tactile input.

In some embodiments, the computing device 101 comprises a touch-enabled display that combines a touch surface 116 (e.g., a touch sensitive surface) and a display 134 of the computing device 101. The touch surface 116 may be overlaid on the display 134, may be the display 134 exterior, or may be one or more layers of material above components of the display 134. In other embodiments, the computing device 101 may display a graphical user interface ("GUI") that includes one or more virtual user interface components (e.g., buttons) on the touch-enabled display and the touch surface 116 can allow interaction with the virtual user interface components.

The computing device 101 may comprise a camera 130. Although the camera 130 is depicted in Figure 1 as being internal to the computing device 101, in some embodiments, the camera 130 may be external to and in communication with the computing device 101. As an example, the camera 130 may be external to and in communication with the computing device 101 via wired interfaces such as, for example, Ethernet, USB, IEEE 1394, and/or wireless interfaces such as IEEE1 802.11, Bluetooth, or radio interfaces.

In some embodiments, the system 100 further includes a macro fiber composite (MFC) element 118 in communication with the processor 102. In some embodiments, the MFC element 118 may be positioned or coupled to the touch surface 116, disposed within the touch surface 116, bonded to the touch surface 116, mechanically connected or coupled to the touch surface 116, or any combination of these. In some embodiments, the MFC element 118 can be coupled to an isolated or single portion of the touch surface 116 to output a haptic effect to the isolated or single portion of the touch surface 116. In another embodiment, the MFC element 118 can be a single contiguous MFC element 118 coupled to an entire area or surface of the touch surface 116. The MFC element 118 can be an element or component that acts as both an actuator and a sensor.

The MFC element 118 is configured to output a haptic effect in response to a haptic signal. For example, the MFC element 118 can output a haptic effect in response to a haptic signal from the processor 102. In some embodiments, the MFC element 118 is configured to output a haptic effect comprising, for example, a surface deformation (e.g., a deformation of a surface associated with the computing device 101), a vibration, a poke, a simulated texture, a squeeze (e.g., if the MFC element 118 is placed in a structure that allows the user to perceive a squeeze when the MFC element 118 deforms a surface associated with the computing device 101). In some embodiments, the MFC element 118 can output the haptic effect to one or more surfaces associated with the computing device 101 (e.g., the touch surface 116).

Although a single MFC element 118 is shown in Figure 1, some embodiments may use multiple MFC elements 118 of the same or different types to produce haptic effects. The computing device 101 may actuate any combination of the MFC element 118 in sequence and/or in concert to generate one or more haptic effects. Further, in some embodiments, the MFC element 118 is in communication with the processor 102 and internal to the computing device 101. In other embodiments, the MFC element 118 is external to the computing device 101 and in communication with the computing device 101 (e.g., via wired interfaces such as Ethernet, USB, IEEE 1394, and/or wireless interfaces such as IEEE 802.11, Bluetooth, or radio interfaces). For example, the MFC element 118 may be associated with (e.g., coupled to) a touch surface 116, which may also be external to the computing device 101 and in communication with the computing device 101 and the MFC element 118 can be configured to receive haptic signals from the processor 102.

In some embodiments, the MFC element 118 can be, or act as, a touch sensor to determine a touch in a touch area or a pressure applied in a touch area (e.g., when an object contacts the touch surface 116) and transmit signals associated with the touch to the processor 102. Haptic activation may be combined with resistive and/or capacitive sensors to determine the location of a touch. The MFC element 118 may capture information including, for example, pressure applied by a touch or a change in pressure caused by the touch (e.g., a pressure or a change in pressure at a location on the touch surface 116). In some embodiments, the MFC element 118 may be configured to detect multiple aspects of the user interaction or touch in the touch area and incorporate this information into the signal transmitted to the processor 102. Although a single MFC element 118 is shown in Figure 1, some embodiments may use multiple MFC elements 118 of the same or different types to determine a pressure applied in a touch area.

Turning to memory 104, modules 124, 126, 128, and 129 are depicted to show how a device can be configured in some embodiments to provide localized pressure sensing and haptic effects on a touch surface (e.g., the touch surface 116). In some embodiments, modules 124, 126, 128, and 129 may comprise processor executable instructions that can configure the processor 102 to perform one or more operations. For example, the processor 102 can execute processor executable instructions stored in modules 124, 126, 128, and 129 to perform the operations.

For example, a detection module 124 includes instructions that can be executed by the processor 102 to cause the processor 102 to monitor the touch surface 116 via the MFC element 118 to determine an amount of pressure or a change in pressure caused by a touch on the touch surface 116. As an example, the detection module 124 may include instructions that, when executed by the processor 102, cause the processor 102 to cause the MFC element 118 to track the presence or absence of a touch on the touch surface 116 and, if a touch is present, to track an amount of pressure of the touch or a change in pressure caused by the touch. In some embodiments, the processor 102 can receive one or more sensor signals from the MFC element 118 and determine an amount of pressure or a change in an amount of pressure on the touch surface 116 based on the sensor signal. In another embodiment, the computing device 101 can include one or more amplifier circuits that can be used to determine an amount of pressure or a change in an amount of pressure on the touch surface 116 based on a sensor signal from the MFC element 118.

In some embodiments, a content provision module 129 includes instructions that can be executed by the processor 102 to provide content (e.g., texts, images, sounds, videos, characters, virtual objects, virtual animations, etc.) to a user (e.g., to a user of the computing device 101). If the content includes computer-generated images, the content provision module 129 includes instructions that, when executed by the processor 102, cause the processor 102 to generate the images for display on a display device (e.g., the display 134 of the computing device 101 or another display communicatively coupled to the processor 102). If the content includes video and/or still images, the content provision module 129 includes instructions that, when executed by the processor 102, cause the processor 102 to access the video and/or still images and generate views of the video and/or still images for display on the display 134.

In some embodiments, the haptic effect determination module 126 includes instructions that, when executed by the processor 102, cause the processor 102 to determine a haptic effect to generate. The haptic effect determination module 126 may include instructions that, when executed by the processor 102, cause the processor 102 to select one or more haptic effects to output using one or more algorithms or lookup tables. In some embodiments, the haptic effect determination module 126 comprises one or more algorithms or lookup tables that include data corresponding to various haptic effects and usable by the processor 102 to determine a haptic effect. Particularly, in some embodiments, the haptic effect determination module 126 may include instructions that, when executed by the processor 102, cause the processor 102 to determine a haptic effect based at least in part on sensor signals (e.g., sensor signals received by the processor 102 from the MFC element 118). For example, the processor 102 may receive sensor signals from the MFC element 118 and determine an amount of pressure applied on the touch surface 116 (e.g., an amount of pressure applied by a touch on the touch surface 116) or a change in pressure on the touch surface 116. The haptic effect determination module 126 may include instructions that, when executed by the processor 102, cause the processor 102 to determine a haptic effect based at least in part on the amount of pressure or the change in pressure. For instance, the haptic effect determination module 126 can include instructions that, when executed by the processor 102, cause the processor 102 to access a lookup table that includes data corresponding to one or more haptic effects associated with various amounts of pressure or changes in pressure and select a haptic effect that corresponds to the detected amount of pressure or the detected change in pressure.

In some embodiments, some or all of the area of the touch surface 116 may be mapped to a graphical user interface ("GUI"), for example a GUI output on the display 134. The GUI can include one or more virtual user interface components (e.g., buttons) with which a user can interact by pressing or touching the virtual user interface components (e.g., with the user's finger or other object). The haptic effect determination module 126 may include instructions that, when executed by the processor 102, cause the processor 102 to select various haptic effects based on a pressure on the touch surface 116 or a change in pressure on the touch surface 116 as the user touches the touch surface 116. As an example, a user may interact with the GUI via the touch surface 116 (e.g., by tapping, pressing, or otherwise touching the touch surface 116), the haptic effect determination module 126 may include instructions that, when executed by the processor 102, cause the processor 102 to access a lookup table or database that includes data corresponding to various haptic effects, along with data indicating various virtual objects displayed via the display 134. The lookup table or database may also include data corresponding to an amount of pressure associated with the various haptic effects and/or objects. In some such embodiments, the haptic effect determination module 126 can include instructions that, when executed by the processor 102, cause the processor 102 to select a haptic effect based on the amount of pressure or the change in pressure on the touch surface 116 and/or the object on the display 134 that the user is touching.

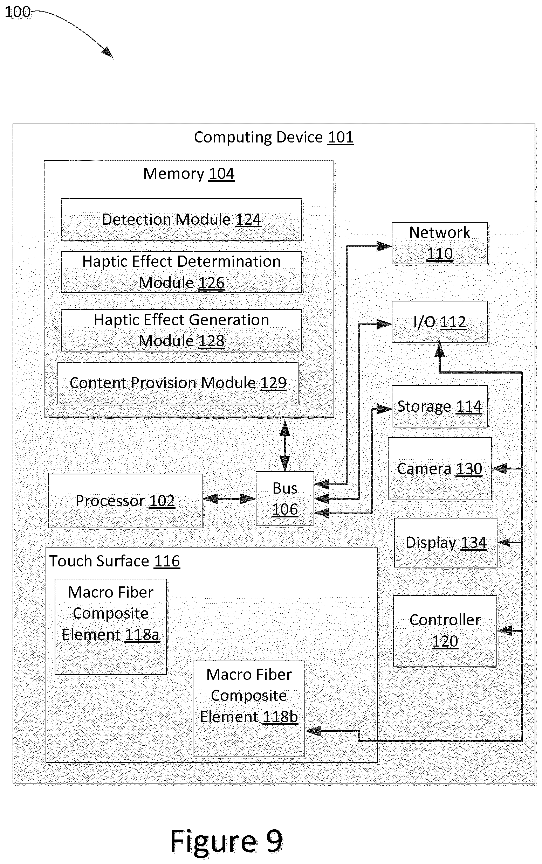

Further, the haptic effect determination module 126 may include instructions that can be executed by the processor 102 to cause the processor 102 to determine one or more MFC elements 118 to actuate, in order to generate or output the haptic effect. For example, the computing device 101 can include one or more MFC elements 118. Each MFC element 118 can be coupled to the touch surface 116 at a particular location or position and can be capable of detecting or sensing an amount of pressure of a touch or a change in pressure caused by a touch on the touch surface 116 at the particular location of the MFC element 118. In this embodiment, the processor 102 may receive a sensor signal indicating an amount of pressure at a first location on the touch surface 116 from a first MFC element 118 coupled to the touch surface 116 at the first location. The processor 102 may determine a first haptic effect based at least in part on the amount of pressure or the change in pressure at the first location. The processor 102 may also receive a sensor signal indicating an amount of pressure at a second location on the touch surface 116 from a second MFC element (not shown) coupled to the touch surface 116 at the second location. The processor 102 can determine a second haptic effect based at least in part on the amount of pressure or the change in pressure at the second location. In this embodiment, the haptic effect determination module 126 may include instructions that, when executed by the processor 102, cause the processor 102 to actuate the first or second MFC element in response to receiving a sensor signal indicating a detected amount of pressure or change in pressure at the first or second location on the touch surface 116. For instance, and with reference to Figure 9, the haptic effect determination module 126 may include instructions that, when executed by the processor 102, cause the processor 102 to actuate a first MFC element 118a or a second MFC element 118b. In this manner, the haptic effect determination module 126 can include instructions that, when executed by the processor 102, cause the processor 102 to determine one or more MFC elements 118 to actuate to generate one or more haptic effects based on sensor signals indicating a detected amount of pressure at a particular location on the touch surface 116 or a detected change in pressure at a particular location on the touch surface 116.

In another embodiment, the haptic effect determination module 126 may include instructions that, when executed by the processor 102, cause the processor 102 to determine a haptic effect based on content provided by the content provision module 129.

In some embodiments, the haptic effect determination module 126 can include instructions that, when executed by the processor 102, cause the processor 102 to select or determine a characteristic (e.g., a magnitude, duration, location, type, frequency, etc.) of the haptic effect based at least in part on sensor signals (e.g., sensor signals received by the processor 102 from the MFC element 118). For example, in one embodiment, the haptic effect determination module 126 may include instructions that, when executed by the processor 102, cause the processor 102 to access one or more lookup tables that include data corresponding to various amounts of pressure on the touch surface 116 or changes in pressure on the touch surface 116 and/or data corresponding to characteristics of haptic effects associated with the amounts of pressure or changes in pressure. The haptic effect determination module 126 can include instructions that, when executed by the processor 102, cause the processor to determine the characteristic of the haptic effect associated with the detected amount of pressure or change in pressure on the touch surface 116. As an example, the haptic effect determination module 126 can include instructions that, when executed by the processor 102, cause the processor 102 to determine a strong or long haptic effect if there is a high amount of pressure on the touch surface 116 (e.g., an amount of pressure above a pressure threshold) or a weak or short haptic effect if there is a low amount of pressure on the touch surface 116 (e.g., an amount of pressure below a pressure threshold).

In some embodiments, the haptic effect generation module 128 represents programming or instruction that, when executed by the processor 102, causes the processor 102 to generate and transmit haptic signals to the MFC element 118 to generate the selected haptic effect. In some embodiments, the processor 102 can transmit haptic signals to the MFC element to cause the MFC element 118 to generate a haptic effect determined by processor 102 executing instructions included in the haptic effect determination module 126.

In some embodiments, the system 100 further includes one or more electrical circuits electrically or communicatively coupled to the MFC element 118 and/or the processor 102. In this embodiment, the MFC element 118 can be electrically or communicatively coupled to a first electrical circuit. The first electrical circuit can be configured to transmit a signal to the MFC element 118 to cause the MFC element 118 to act as a sensor and detect a pressure or a change in pressure on the touch surface 116 and transmit a sensor signal to the processor 102 for determining an amount of pressure or a change in pressure on the touch surface 116. The MFC element 118 can also be electrically or communicatively coupled to a second electrical circuit. The second electrical circuit can be configured to transmit a signal to the MFC element 118 to cause the MFC element 118 to receive a haptic signal from the processor 102 to cause the MFC element 118 to output a haptic effect based on the haptic signal.

In some embodiments, the system 100 further includes a switching circuit 120 that can be electrically or communicatively connected to the one or more electrical circuits to switch between I the circuits. For example, the switching circuit 120 can be configured to connect the MFC element 118 to the first electrical circuit such that the first electrical circuit causes the MFC element 118 to act as a sensor and detect pressure or a change in pressure on the touch surface 116 and transmit a sensor signal to the processor 102. In this example, once the sensor signal is transmitted, the processor 102 can generate a switching signal and transmit the switching signal to the switching circuit 120, which causes the switching circuit 120 to switch the connection of the MFC element 118 from the first electrical circuit to the second electrical circuit (e.g., activate or cause the second electrical circuit to be in an ON mode) to cause the first electrical circuit to be inactive mode (e.g., in an OFF mode). In this example, once the MFC element 118 is connected to the second electrical circuit, the processor 102 can generate a haptic signal and transmit the haptic signal to the second electrical circuit. In some examples, a power amplifier or other component (not shown) of the second electrical circuit can receive the haptic signal and amplify or otherwise adjust the haptic signal (e.g., adjust a current or voltage of the haptic signal to ensure that there is sufficient current or voltage to drive the MFC element 118) and the second electrical circuit can output the haptic signal or the adjusted haptic signal to the MFC element 118 to cause the MFC element 118 to output a haptic effect. In this manner, the switching circuit 120 can act as a switch that causes the MFC element 118 to be connected to either the first electrical circuit or the second electrical circuit and act as either a sensor or a haptic actuator. In some embodiments, the system 100 may not include the switching circuit 120 or, in other embodiments, the switching circuit 120 may not be configured to switch between the circuits or control the circuits. In some embodiments, the system 100 may not include an amplifier or component for amplifying or adjusting the haptic signal from the processor 102.

In some embodiments, the MFC element 118 can be coupled to the touch surface 116 to output one or more haptic effects to the touch surface 116. As an example, the MFC element 118 can be positioned beneath the touch surface 116 at a particular location on the touch surface 116 or be a portion of the touch surface 116. As another example, the MFC element 118 can be bonded or mechanically attached or coupled to the touch surface 116 at a particular location on the touch surface 116.

In some embodiments, the touch surface 116 can include one or more components or features for indicating a position or location of the MFC element 118. For example, a design or configuration of the computing device 101 can include a marking, lighting, illumination, or other visual features at a position or location of the MFC element 118, which can indicate to a user the location or position of the MFC element 118. As another example, a design or configuration of the computing device 101 can include an indentation (e.g., a divot), a protrusion (e.g., a bump), a button, or any other physical feature at the location or position of the MFC element 118, which can indicate to the user the location or position of the MFC element 118. As still another example, the computing device 101 may display a graphical user interface ("GUI") that includes one or more virtual user interface components (e.g., buttons), which can indicate to the user the location or position of the MFC element 118. In another embodiment, the computing device 101 may not include a component or feature for indicating a position or location of the MFC element 118. As an example, the touch surface 116 can be a contiguous surface without any indentations or protrusions for indicating the position or location of the MFC element 118.

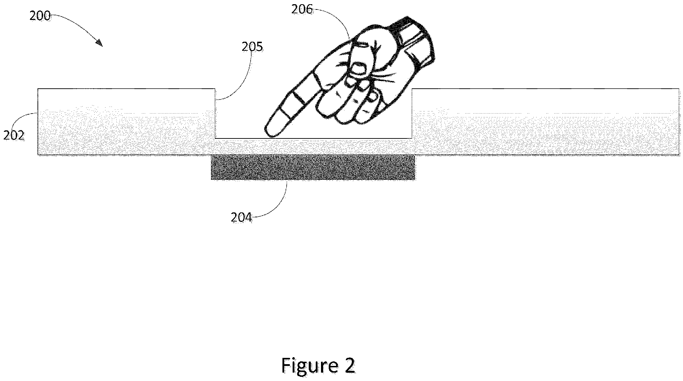

In some embodiments, the MFC element 118 may comprise one or more sensors or haptic actuation systems for providing localized pressure sensing and haptic effects on a touch surface 116 associated with a computing device 101 (e.g., the touch surface 116). For example, Figure 2 shows an embodiment of a haptic actuation system 200 for providing localized pressure sensing and haptic effects on a touch surface 202 according to one embodiment. In this example, the touch surface 202 can be any touch surface (e.g., the touch surface 116 of Figure 1). The haptic actuation system 200 includes a MFC element 204 that is configured to act as both a sensor and a haptic actuator. In some embodiments, the MFC element 204 can include one or more polymeric layers or piezoelectric macro-fibers. In some embodiments, the polymeric layers or piezoelectric macro-fibers can be positioned between one or more layers of a bonding or an adhesive material, electrically conductive electrodes, and/or a film layer (e.g., a polyimide film layer or any other film layer). In this example, the electrodes can be attached to the film layer in an interdigitated pattern, which can allow a voltage or current applied to the MFC element 204 (e.g., a voltage or current provided via the processor 102) to be transferred to and from the polymeric layers or piezoelectric macro-fibers. In some embodiments, the MFC element 204 may bend, twist, flex, or otherwise deform.

In some embodiments, the electrically conductive interdigitated electrodes can be made of any suitable electrically conductive material including, but not limited to, copper, gold, silver, another electrically conductive material, or a combination thereof. In some examples, the film layer can include polyimide such as, Kapton, for example. In some embodiments, one or more of the piezoelectric macro-fibers can be made of any suitable fiber including, but not limited to, a piezoelectric material such as PZT-5 piezoelectric ceramic. Any suitable bonding or adhesive material can be used for bonding. For example, epoxy (e.g., DP-460 epoxy), urethane, acrylic, another suitable bonding material, or a combination thereof may be used in various examples.

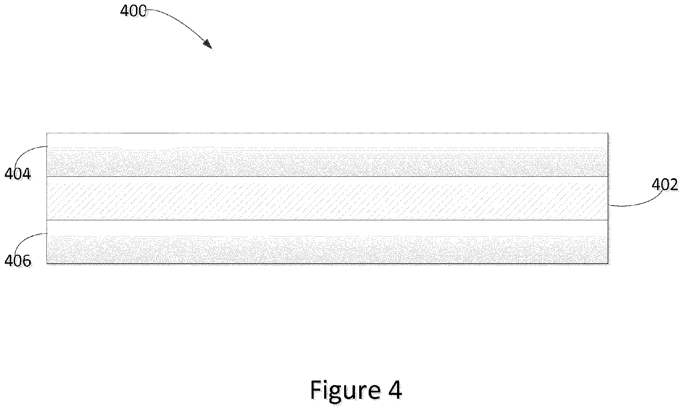

For example, Figure 4 shows an embodiment of a MFC element 400 (e.g., the MFC element 118 of Figure 1 or the MFC element 204 of Figure 2) for providing localized pressure sensing and haptic effects on a touch surface according to one embodiment. In this embodiment, the MFC element 400 includes a polymeric layer 402 positioned between a first electrode layer 404 and a second electrode layer 406.

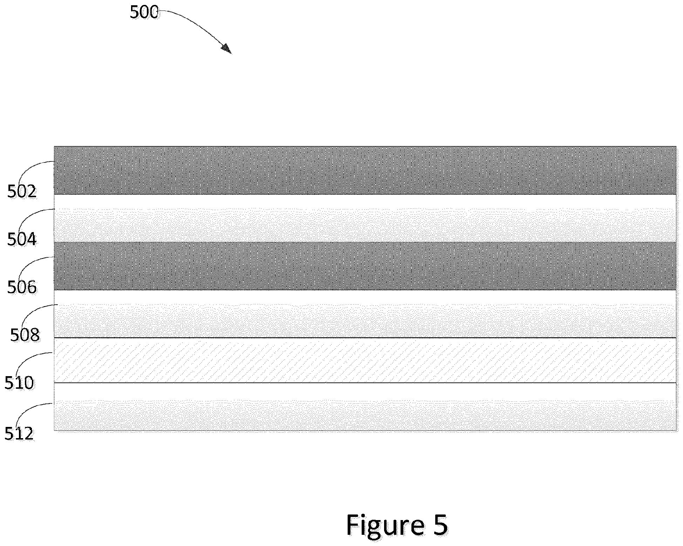

Figure 5 shows a MFC element 500 (e.g., the MFC element 118 of Figure 1 or the MFC element 204 of Figure 2) for providing localized pressure sensing and haptic effects on a touch surface according to another embodiment. In the example depicted in Figure 5, the MFC element 500 includes a first insulating layer 502 and a second insulating layer 506. In some examples, the first insulating layer 502 and the second insulating layer 506 can each be configured for sensing a capacitance. In another example, the first insulating layer 502 and the second insulating layer 506 can each be a polymer layer configured to sense pressure. The MFC element 500 also includes a polymeric layer 510. The MFC element 500 also includes a first layer 504 of electrically conductive electrodes, a second layer 508 of electrically conductive electrodes, and a third layer 512 of electrically conductive electrodes. While in the examples depicted in Figures 4 and 5, the MFC element is shown as including a particular number, type, and/or configuration of layers, some embodiments may use any number, or configuration of layers of the same or different types.

Returning to Figure 2, in some embodiments, the touch surface 202 can be a transparent and/or flexible surface. In another embodiment, the touch surface 202 may not be transparent or flexible. In some embodiments, the touch surface 202 can be of any shape or configuration. As an example, the touch surface 202 can be a curved surface. In the embodiment depicted in Figure 2, the MFC element 204 is positioned at a particular location beneath the touch surface 202 (e.g., attached or coupled to a bottom of the touch surface 202 at a particular position or location). In other embodiments, the MFC element 204 can be positioned at any location on the touch surface 202.

The MFC element 204 can be capable of detecting or sensing an amount of pressure or a change in pressure caused by a user touch as the user' touches the touch surface 202 at the location of the MFC element 204 (e.g., with the user's finger 206, other body part, or object). In this example, the MFC element 204 can transmit a sensor signal to a processor (e.g., processor 102), which can determine a haptic effect to be generated and output by the MFC element 204 based on the detected amount of pressure or change in pressure at the location of the MFC element 204.

In this embodiment, the touch surface 202 includes a feature indicating a position or location of the MFC element 204. For example, in the example depicted in Figure 2, the touch surface 202 includes an indentation 205 (e.g., a divot or cavity) at the location or position of the MFC element 204. In this example, the touch surface 202 can have a reduced thickness or height at the indentation 205 or location of the MFC element 204 (e.g., the touch surface 202 can be thinner at the indentation 205 or the location of the MFC element 204), which can allow a user to perceive a haptic effect generated by the MFC element 204 as being stronger (e.g., a strong vibration). In other embodiments, the touch surface 202 can include various components or features indicating the position or location of the MFC element 204 (e.g., a marking, paint, lighting, illumination, a protrusion, or any other visual or physical feature or component for indicating the position or location of the MFC element 204). In another embodiment, the touch surface 202 may not include a component or feature for indicating a position or location of the MFC element 204. As an example, the touch surface 202 can be a contiguous surface without any indentations or protrusions.

While in the example depicted in Figure 2, the haptic actuation system 200 includes one MFC element 204, some embodiments may use any number of MFC elements 204 of the same or different types in sequence and/or in concert to produce haptic effects. Each MFC element 204 can be coupled to a portion of the touch surface 202. In one such embodiment, each portion of the touch surface 202 may be associated with at least one MFC element 204. In such embodiments, each MFC element 204 can output a haptic effect to a corresponding portion of the touch surface 202. As an example, a first MFC element 204 can receive a first haptic signal (e.g., from the processor 102 of Figure 1) and output a first haptic effect to a first portion of the touch surface 202 based on the first haptic signal. A second MFC element 204 can receive a second haptic signal and output a second haptic effect to a second portion of the touch surface 202 based on the second haptic signal. In some embodiments, the first haptic effect and the second haptic effect may be the same or different types of haptic effects. In this manner, various MFC elements 204 can be used to detect an amount of localized pressure at various locations on the touch surface 202 and output one or more haptic effects at the various locations based on the detected amount of pressure.

### Illustrative Methods for Haptic Feedback for Providing Localized Pressure Sensing and Haptic Effects on a Touch Surface

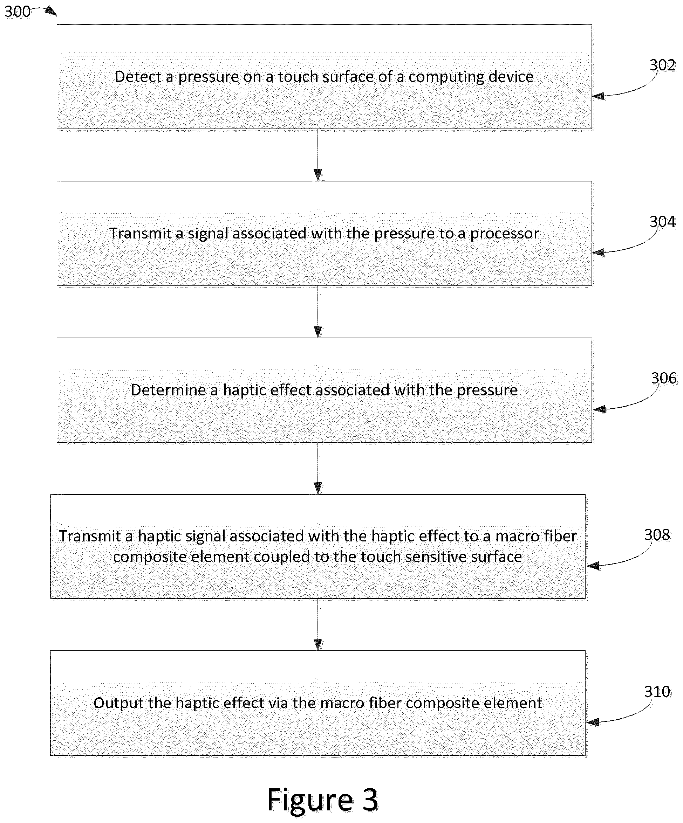

Figure 3 is a flow chart of steps for performing a method 300 for providing localized pressure sensing and haptic effects on a touch surface according to one embodiment. In some embodiments, the steps in Figure 3 may be implemented in program code that is executable by a processor, for example, the processor in a general purpose computer, a mobile device, or a server. In some embodiments, these steps may be implemented by a group of processors. In some embodiments, one or more steps shown in Figure 3 may be omitted or performed in a different order. Similarly, in some embodiments, additional steps not shown in Figure 3 may also be performed. For illustrative purposes, the steps of the method 300 are described below with reference to components described above with regard to the system shown in Figure 1, but other implementations are possible.

The method 300 begins at step 302 when a macro fiber composite (MFC) element 118 detects pressure on a touch surface 116 of a computing device 101. For example, the MFC element 118 is connected or coupled to the touch surface 116. In some embodiments, the MFC element 118 can be capable of detecting or sensing a pressure or a change in pressure on the touch surface 116 caused by a contact or touch between an object (e.g., a user's hand, finger or skin, or a stylus or other object) and the touch surface 116. In some embodiments, the MFC element 118 is coupled to the touch surface 116 at a particular location or position on the touch surface 116 and the MFC element 118 detects the pressure or the change in pressure at that particular location or position on the touch surface 116.

The method 300 continues at step 304 when a signal associated with the pressure is transmitted to a processor 102. In some embodiments, the MFC element 118 transmits the signal associated with the pressure to the processor 102. The signal can indicate an amount of pressure or a change in an amount of pressure at a particular position or location on the touch surface 116 (e.g., at the location or position of the MFC element 118).

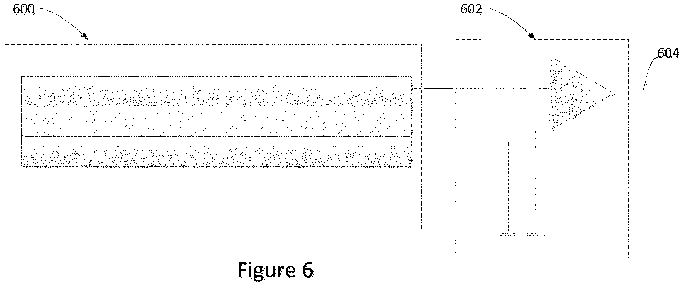

In some embodiments, and with reference to steps 302 and 304, the MFC element 118 can be electrically or communicatively coupled to a first electrical circuit configured to cause the MFC element 118 to act as a sensor and detect a pressure or a change in pressure on the touch surface 116 and transmit a sensor signal to the processor 102 for determining an amount of pressure or a change in pressure on the touch surface 116. For example, Figure 6 shows a MFC element 600 (e.g., the MFC element 118 of Figure 1) for providing localized pressure sensing and haptic effects on a touch surface. In the example depicted in Figure 6, the MFC element 600 is electrically or communicatively coupled to an electrical circuit 602 that causes the MFC element 600 to act as a sensor and detect a pressure or a change in pressure on a touch surface 116. In this example, the MFC element 600 transmits a sensor signal 604 to the processor 102 for determining an amount of pressure or a change in pressure on the touch surface 116.

Returning to Figure 3, the method continues at step 306 when the processor 102 determines a haptic effect associated with the pressure. In some examples, a haptic effect determination module 126 include instructions that, when executed by the processor 102, cause the processor 102 to determine the haptic effect. In some embodiments, the haptic effect can include one or more haptic effects.

For example, the processor 102 can determine a haptic effect (e.g., one or more vibrations) based at least in part on a signal received from the MFC element 118 (e.g., in step 304). As an example, the signal may indicate an amount of pressure or a change in an amount of pressure on the touch surface 116 at a location or position of the MFC element 118. The processor 102 may receive the signal and access one or more lookup tables or databases that include data corresponding to various signals (e.g., various amounts of pressure or changes in amounts of pressure), along with data indicating one or more haptic effects associated with the one or more sensor signals. The processor 102 can select from the lookup table or database a haptic effect that corresponds to the amount of pressure or the change in the amount of pressure on the touch surface 116. For example, in response to a user applying a high amount of pressure on the touch surface 116 at the location or position of the MFC element 118, the processor 102 can select a haptic effect that includes a vibration and the vibration can be output to the user.

In some embodiments, in step 306, the processor 102 can determine a characteristic (e.g., a magnitude, duration, location, type, frequency, etc.) of the haptic effect based at least in part on a signal received from the MFC element 118 (e.g., in step 304). As an example, the processor 102 can determine that the amount of pressure or the change in the amount of pressure on the touch surface 116 is above a pressure threshold (e.g., when the user is pressing firmly on the touch surface 116). Based on this determination, the processor 102 can determine a strong or long haptic effect. As another example, the processor 102 can determine that the amount of pressure or the change in the amount of pressure on the touch surface 116 is below the pressure threshold (e.g., when the user is pressing gently on the touch surface 116) and determine a weak or short haptic effect.

In some embodiments, the processor 102 can determine the haptic effect based on an event. For example, the computing device 101 can receive an e-mail or a text message (e.g., from another computing device) and generate a notification based on the received e-mail or text message. The processor 102 can access a lookup table that includes various haptic effects and select a haptic effect that corresponds to a received e-mail or text message. In other embodiments, the processor 102 can determine one or more haptic effects based on one or more sensor signals and/or one or more events.

In some embodiments, in step 306, the processor 102 may determine one or more MFC elements 118 to actuate, in order to generate or output the determined haptic effect. For example, a signal received from the MFC element 118 may indicate a location of a user's touch on the touch surface 116 and the processor 102 can access a lookup table that includes data corresponding to various haptic effects, along with data corresponding to various MFC elements 118 for outputting each haptic effect and a location of each MFC element 118. The processor 102 can select a haptic effect or a MFC element 118 from the lookup table to output the haptic effect based on the location of the user's touch. As an example, the processor 102 may select one or more haptic effects from the lookup table based on the user applying pressure to a particular location on the touch sensitive surface that corresponds to a location of a MFC element 118. The haptic effect can simulate the presence of a virtual object (e.g., a virtual piece of furniture, automobile, animal, cartoon character, button, lever, logo, or person) on a display 134 of the computing device 101, which the user may be interacting with via the touch surface 116 (e.g., by clicking on the virtual object).

The method 300 continues at step 308 when the processor 102 transmits a haptic signal associated with the haptic effect to a MFC element 118 coupled to the touch surface 116. In some embodiments, the haptic effect generation module 128 include instructions that, when executed by the processor 102, cause the processor 102 to generate and transmit the haptic signal to the MFC element 118.

The method 300 continues at step 310 when the MFC element 118 coupled to the touch surface 116 outputs the haptic effect. In some embodiments, the MFC element 118 receives the haptic signal from the processor 102 and outputs the haptic output effect to the touch surface 116 based on the haptic signal.

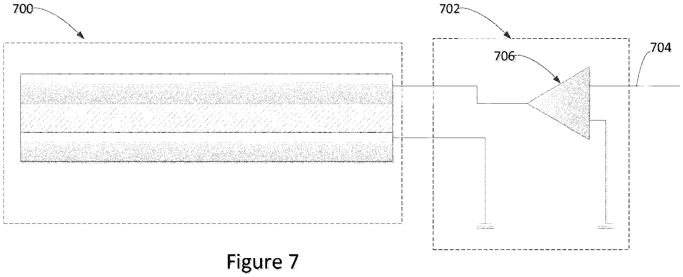

In some embodiments, and with reference to steps 308 and 310, the MFC element 118 can be electrically or communicatively coupled to a second electrical circuit that is configured to cause the MFC element 118 to receive a haptic signal from the processor 102 to cause the MFC element 118 to output a haptic effect based on the haptic signal. For example, Figure 7 shows a MFC element 700 (e.g., the MFC element 118 of Figure 1) for providing localized pressure sensing and haptic effects on a touch surface. In the example depicted in Figure 7, the MFC element 700 is electrically or communicatively coupled to an electrical circuit 702 that causes the MFC element 700 to receive a control signal 704 (e.g., a haptic signal) from the processor 102 that causes the MFC element 700 to output a haptic effect based on the control signal 704. In some examples, the electrical circuit 702 can include an amplifier 706 or other component that is configured to amplify the control signal 704 received from the processor 102 and provide an amplified haptic signal to the MFC element 700.

In some embodiments, and with reference to steps 302, 304, 308, and 310, a switching circuit can be electrically or communicatively connected to the one or more electrical circuits to switch between the circuits or control the circuits (e.g., by activating or deactivating one or more of the circuits).

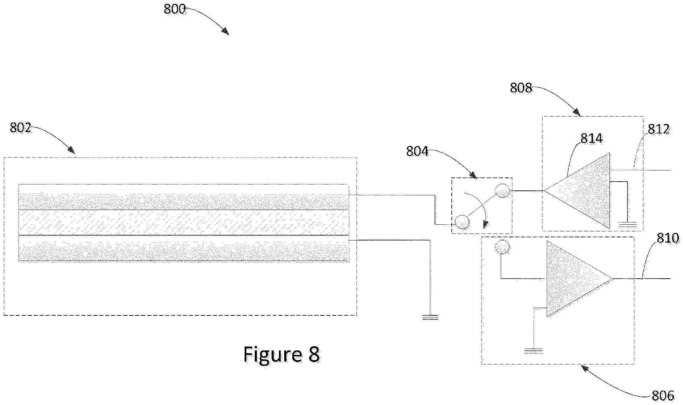

For example, Figure 8 shows an embodiment of a haptic actuation system 800 for providing localized pressure sensing and haptic effects on a touch surface according to one embodiment. In this example, the system 800 includes a MFC element 802 (e.g., the MFC element 118 of Figure 1). The system 800 further includes a switching circuit 804 (e.g., the switching circuit 120 of Figure 1) that can be electrically or communicatively connected to a first electrical circuit 806 (e.g., the electrical circuit 602 of Figure 6) and a second electrical circuit 808 (e.g., the electrical circuit 702 of Figure 7) to switch between the first electrical circuit 806 and the second electrical circuit 808 (e.g., by activating or deactivating either the first electrical circuit 806 or the second electrical circuit 808).

The switching circuit 804 can be configured to connect the MFC element 802 to the first electrical circuit 806 such that the first electrical circuit 806 causes the MFC element 802 to act as a sensor and detect pressure or a change in pressure on the touch surface 116 and transmit a sensor signal 810 to the processor (e.g., in steps 302 and 304). In this example, once the sensor signal 810 is transmitted, the processor 102 can generate a switching signal and transmit the switching signal to the switching circuit 804, which causes the switching circuit 804 to switch the connection of the MFC element 802 from the first electrical circuit 806 to the second electrical circuit 808 (e.g., activate or cause the second electrical circuit to be in an ON mode) to cause the first electrical circuit to be inactive mode (e.g., in an OFF mode). In this example, once the MFC element 802 is connected to the second electrical circuit 808, the processor 102 can generate a haptic signal 812 and transmit the haptic signal 812 to the second electrical circuit 808 (e.g., in step 308). The second electrical circuit 808 can include an amplifier 814 or other component that is configured to receive the haptic signal 812 and amplify the haptic signal 812 received from the processor 102 and provide an amplified haptic signal to the MFC element 802 to cause the MFC element to output a haptic effect. In this manner, the switching circuit 804 can act as a switch that causes the MFC element 802 to be connected to either a first electrical circuit 806 or a second electrical circuit 808 and act as either a sensor or a haptic actuator. In addition, the processor 102 can generate a switching signal that switches the MFC element 802 from the second electrical circuit 808 to the first electrical circuit 806, such as to disconnect the MFC element 802 from the amplifier. In some embodiments, the system 800 may not include the switching circuit 804 or, in other embodiments, the switching circuit 804 may not be configured to switch between the circuits or control the circuits.

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of example configurations (including implementations). However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Also, configurations may be described as a process that is depicted as a flow diagram or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Having described several example configurations, various modifications, alternative constructions, and equivalents may be used without departing from the spirit of the disclosure. For example, the above elements may be components of a larger system, wherein other rules may take precedence over or otherwise modify the application of the invention. Also, a number of steps may be undertaken before, during, or after the above elements are considered. Accordingly, the above description does not bound the scope of the claims.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or values beyond those recited. Headings, lists, and numbering included herein are for ease of explanation only and are not meant to be limiting.

Embodiments in accordance with aspects of the present subject matter can be implemented in digital electronic circuitry, in computer hardware, firmware, software, or in combinations of the preceding. In one embodiment, a computer may comprise a processor or processors. The processor comprises or has access to a computer-readable medium, such as a random access memory (RAM) coupled to the processor. The processor executes computer-executable program instructions stored in memory, such as executing one or more computer programs including a sensor sampling routine, selection routines, and other routines to perform the methods described above.

Such processors may comprise a microprocessor, a digital signal processor (DSP), an application-specific integrated circuit (ASIC), field programmable gate arrays (FPGAs), and state machines. Such processors may further comprise programmable electronic devices such as PLCs, programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example tangible computer-readable media, that may store instructions that, when executed by the processor, can cause the processor to perform the steps described herein as carried out, or assisted, by a processor. Embodiments of computer-readable media may comprise, but are not limited to, all electronic, optical, magnetic, or other storage devices capable of providing a processor, such as the processor in a web server, with computer-readable instructions. Other examples of media comprise, but are not limited to, a floppy disk, CD-ROM, magnetic disk, memory chip, ROM, RAM, ASIC, configured processor, all optical media, all magnetic tape or other magnetic media, or any other medium from which a computer processor can read. Also, various other devices may comprise computer-readable media, such as a router, private or public network, or other transmission device. The processor, and the processing, described may be in one or more structures, and may be dispersed through one or more structures. The processor may comprise code for carrying out one or more of the methods (or parts of methods) described herein.

While the present subject matter has been described in detail with respect to specific embodiments thereof, it will be appreciated that those skilled in the art, upon attaining an understanding of the foregoing may readily produce alterations to, variations of, and equivalents to such embodiments. Accordingly, it should be understood that the present disclosure has been presented for purposes of example rather than limitation, and does not preclude inclusion of such modifications, variations and/or additions to the present subject matter as would be readily apparent to one of ordinary skill in the art.

## Claims

1. A system (100) comprising:
a touch surface (116);
a macro fiber composite (MFC) element (118) coupled to the touch surface at a location on the touch surface, wherein the MFC element is configured to detect a pressure associated with a contact on the touch surface at the location and transmit a signal indicating the pressure; and
a processor (102) communicatively coupled to the MFC element, the processor configured to:
receive, from the MFC element, the signal indicating the pressure;
determine an amount of pressure or a change in pressure at the location based at least in part on the signal;
determine a haptic effect associated with the amount of pressure or the change in pressure; and
transmit (308) a haptic signal associated with the haptic effect to the MFC element, wherein the MFC element is configured to receive the haptic signal and output the haptic effect to the location on the touch surface based on the haptic signal.

2. The system (100) of claim 1, further comprising:
a first electrical circuit communicatively coupled to the MFC element (118), the first electrical circuit configured to transmit a first signal to the MFC element to cause the MFC element to detect the pressure and transmit the signal indicating the pressure; and
a second electrical circuit communicatively coupled to the MFC element, the second electrical circuit configured to transmit a second signal to the MFC element to cause the MFC element to receive the haptic signal from the processor (102) and output the haptic effect based on the haptic signal.

3. The system (100) of claim 2, further comprising a switching circuit (120), the switching circuit operable for switching between the first electrical circuit and the second electrical circuit.

4. The system (100) of any of claims 1 - 3, wherein the touch surface (116) comprises a feature for identifying the location of the MFC element (118);
and optionally;
wherein the feature comprises at least one of a marking, lighting, an indentation, or a protrusion that corresponds to the location of the MFC element.

5. The system (100) of any of claims 1 - 4, wherein the MFC element (118) is a first MFC element coupled to a first portion of the touch surface (116) at a first location on the touch surface, the first MFC element configured to receive a first haptic signal associated with a first haptic effect and output the first haptic effect to the first location on the touch surface and the system further comprises:
a second MFC element coupled to a second portion of the touch surface at a second location on the touch surface, the second MFC element configured to receive a second haptic signal associated with a second haptic effect and output the second haptic effect to the second location on the touch surface.

6. The system (100) of any of claims 1 - 5, wherein the touch surface (116) has a first thickness at the location of the MFC element (118) and a second thickness at a remainder of the touch surface, wherein the first thickness is thinner than the second thickness.

7. A method (300) comprising:
detecting (302), by a macro fiber composite (MFC) element (118), a pressure associated with a contact at a location on a touch surface (116), wherein the MFC element is coupled to the touch surface at the location;
receiving, by a processor (102), a signal associated with the pressure;
determining, by the processor, a haptic effect based on the signal;
transmitting (308), by the processor, a haptic signal associated with the haptic effect to the MFC element; and
outputting (310), by the MFC element, the haptic effect to the location on the touch surface.

8. The method (300) of claim 7, further comprising:
transmitting, by a first electrical circuit, a first signal to the MFC element (118);
detecting, by the MFC element, the pressure associated with the contact in response to receiving the first signal;
transmitting, by a second electrical circuit, a second signal to the MFC element; and
receiving, by the MFC element, the haptic signal from the processor (102) in response to receiving the second signal.

9. The method (300) of claim 8, further comprising switching, via a switching circuit (120), between the first electrical circuit and the second electrical circuit, wherein switching between the first electrical circuit and the second electrical circuit comprises:
transmitting, by the first electrical circuit, the first signal; and
switching, by the switching circuit and after transmitting, by the first electrical circuit, the first signal, the first electrical circuit to an inactive mode; and
transmitting, by the second electrical circuit and after the first electrical circuit is in the inactive mode, the second signal.

10. The method (300) of any of claims 7 - 9, wherein the MFC element (118) is a first MFC element coupled to a first portion of the touch surface (116) at a first location on the touch surface, the method further comprising:
receiving, by the first MFC element, a first haptic signal associated with a first haptic effect;
outputting, by the first MFC element, the first haptic effect to the first location on the touch surface;
receiving, by a second MFC element coupled to a second portion of the touch surface at a second location on the touch surface, a second haptic signal associated with a second haptic effect; and
outputting, by the second MFC element, the second haptic effect to the second location on the touch surface.

11. A system (100) comprising:
a touch surface (116); and
a macro fiber composite (MFC) element (118) coupled to the touch surface at a location on the touch surface and beneath the touch surface, wherein the MFC element is configured to detect a pressure associated with a contact on the touch surface at the location and transmit a signal indicating the pressure and wherein the MFC element is configured to receive a haptic signal and output a haptic effect to the location on the touch surface in response to receiving the haptic signal.

12. The system (100) of claim 11, further comprising:
a processor (102) communicatively coupled to the MFC element (118), the processor configured to:
receive, from the MFC element, the signal indicating the pressure;
determine an amount of pressure or a change in pressure at the location based at least in part on the signal;
determine a haptic effect associated with the amount of pressure or the change in pressure; and
transmit a haptic signal associated with the haptic effect to the MFC element.

13. The system (100) of claims 11 or 12, further comprising:
a first electrical circuit communicatively coupled to the MFC element (118), the first electrical circuit configured to transmit a first signal to the MFC element to cause the MFC element to detect the pressure and transmit the signal indicating the pressure; and
a second electrical circuit communicatively coupled to the MFC element, the second electrical circuit configured to transmit a second signal to the MFC element to cause the MFC element to receive the haptic signal and output the haptic effect based on the haptic signal;
and optionally,
.further comprising a switching circuit (120), the switching circuit operable for switching between the first electrical circuit and the second electrical circuit.

14. The system (100) of any of claims 11 - 13, wherein the touch surface (116) comprises a feature for identifying the location of the MFC element (118), wherein the feature comprises at least one of a marking, lighting, an indentation, or a protrusion that corresponds to the location of the MFC element.

15. The system (100) of any of claims 11 - 14, wherein the MFC element (118) is a first MFC element coupled to a first portion of the touch surface (116) at a first location on the touch surface, the first MFC element configured to receive a first haptic signal associated with a first haptic effect and output the first haptic effect to the first location on the touch surface and the system further comprises:
a second MFC element coupled to a second portion of the touch surface at a second location on the touch surface, the second MFC element configured to receive a second haptic signal associated with a second haptic effect and output the second haptic effect to the second location on the touch surface.
